# FASCICULE DE BREVET EUROPEEN

(11) **EP 2 159 439 B1**
(45) Date de publication et mention de la délivrance du brevet: **25.01.2012**
(21) Numéro de dépôt: 09168448.0
(22) Date de dépôt: 24.08.2009
(51) Int. Cl.: F16D 23/04

(54) **Dispositif de friction pour transmission de couple**
Reibungsvorrichtung für Momentübertragung
Friction device for transmitting torque

(30) Priorité: 25.08.2008 FR 0855688
(43) Date de publication de la demande: 03.03.2010
(73) Titulaire: Peugeot Citroën Automobiles SA, 78140 Vélizy-Villacoublay (FR)
(72) Inventeur: Mitchell, Clément, 92250 La Garenne Colombes (FR); Lelasseux, Xavier, 92150 Suresnes (FR); Washeul, Michaël, 78260 Acheres (FR)

(56) Documents cités:
- DE-B- 1 060 718
- FR-A- 2 742 501
- FR-A- 2 821 652
- FR-A- 2 890 426
- US-A- 5 135 087

## Description

La présente invention est relative à un dispositif de synchronisation pour une boîte de vitesses, et notamment pour une boîte de vitesses à dérivation de couple par un rapport supérieur. Elle concerne plus particulièrement un dispositif de friction à haute capacité pour transmission de couple par glissement.

L'invention trouve une application particulièrement avantageuse dans le domaine des boîtes de vitesses mécaniques, manuelles ou pilotées, pour véhicule automobile. Toutefois, l'invention peut également être mise en oeuvre avec les véhicules à deux roues motorisés.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Une boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer le passage d'un rapport de vitesse.

A cet effet, le manchon est lié en rotation à son arbre mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

De telles boîtes sont connues pour introduire un temps de coupure de transmission de couple qui peut devenir important et surtout source d'inconfort notamment pour les puissances élevées.

Ce temps de coupure est lié à la synchronisation qui permet de rendre compatibles les vitesses de rotation différentes entre les arbres liés par les trains de réduction, et qui implique notamment les étapes de coupure des gaz, débrayage, passage de rapport, embrayage et remise des gaz.

Pour remédier à ce problème, il est connu d'utiliser un ou plusieurs organes de friction unique capable d'égaliser les vitesses de rotation des arbres par frottement, cet organe de friction étant positionné sur le rapport final de démultiplication ou bien sur un rapport intermédiaire.

Le dispositif de friction assure une dérivation de couple qui permet, en plus de transmettre du couple pendant le changement de rapport, de supprimer le choc inhérent à l'utilisation de crabots, source d'inconfort, tout en conservant une architecture conventionnelle.

Ainsi, lors d'un passage montant d'un rapport N vers N+1, le dispositif de frottement transmet progressivement du couple par glissement (on utilise le fait que l'arbre primaire lié au moteur évolue à une vitesse de rotation plus importante que celui du pignon moteur du rapport final) jusqu'à provoquer la chute du régime d'arbre primaire.

Cette chute de régime permet au rapport N d'être désengagé et d'engager le rapport N+1 alors que du couple est transmis par un rapport supérieur. Dès que le rapport N+1 est engagé, le dispositif de friction est progressivement désactivé et le couple est intégralement transmis par le rapport N+1.

De nombreux dispositifs aptes à transmettre du couple par glissement sont connus.

Dans les boîtes de vitesses mécaniques, il est par exemple connu d'utiliser des synchroniseurs multi cônes, qui permettent d'assurer la synchronisation des régimes de rotation des arbres primaire et secondaire avant d'engager un rapport. Ces synchroniseurs sont dits multi cônes car ils comportent plusieurs surfaces de frottement coniques. Selon une disposition habituelle dans ce domaine, les synchroniseurs comportent un manchon baladeur, se déplaçant sous la commande d'une fourchette le long d'un moyeu solidaire d'un arbre de boîte. Ce baladeur est muni de dents venant craboter la denture d'un pignon fou après avoir traversé celle d'une bague de synchronisation.

Sont également connus des synchroniseurs dans lesquels le baladeur ne présente pas de denture de crabotage, mais où les anneaux de synchronisation transforment le mouvement de rotation reçu du moyeu en poussée axiale contre un pignon, de façon à transmettre eux-mêmes le couple moteur entre le moyeu et le pignon, en exerçant sur celui-ci une pression constante. On connaît par exemple par la publication FR 2 821 652, un ensemble de synchronisation multi-cônes, comprenant un anneau supérieur solidaire en rotation du moyeu, un anneau conique intermédiaire, et un anneau conique inférieur. Dans ce synchroniseur, l'anneau conique inférieur est monté sur un flasque immobilisé par des cannelures sur le pignon fou. L'anneau supérieur et l'anneau inférieur sont solidaires du moyeu, tandis que l'anneau intermédiaire et le cône sont solidaires en rotation du pignon fou par l'intermédiaire du flasque. La mise en service du dispositif de couplage est assurée par le déplacement axial de l'anneau extérieur et par la mise en contact des surfaces coniques en vis à vis, à l'aide d'un baladeur de type roulement à billes dont le déplacement axial est obtenu par le mouvement axial d'une fourchette qui encercle le roulement.

Quelque soit le type de synchroniseur, la mise en contact des surfaces coniques en vis-à-vis est obtenu par déplacement axial d'un baladeur vers le pignon fou dont le régime de rotation doit être synchronisé.

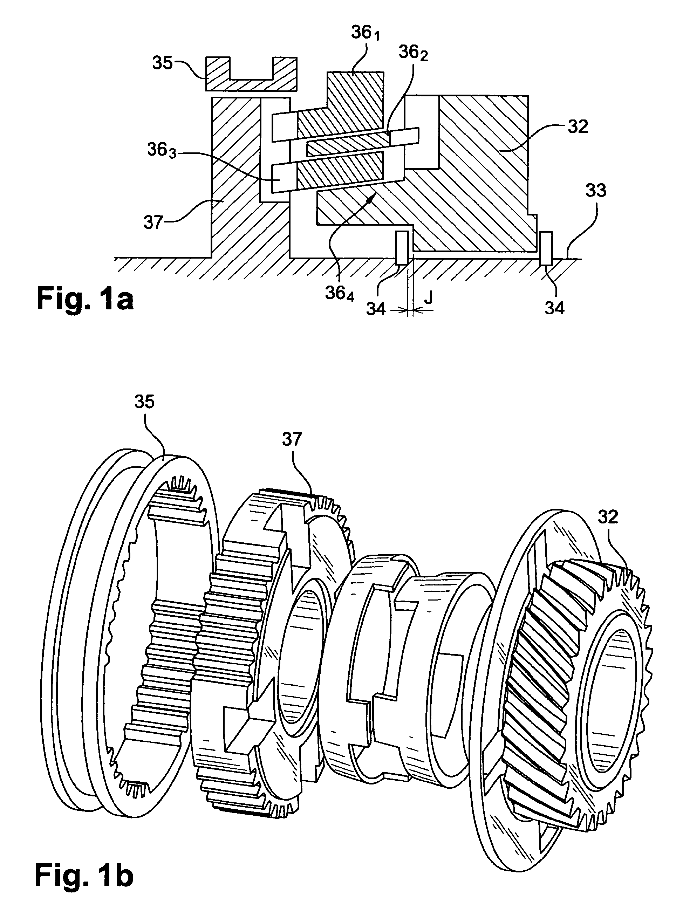

Un exemple de synchroniseur connu est représenté aux figures 1a et 1 b. Un pignon fou 32 est monté sur son arbre 33 entre des moyens d'arrêt en translation 34 (dans l'exemple des circlips), avec un léger jeu axial J afin de rester libre en rotation sur l'arbre moteur. Ce jeu (généralement compris entre 0,1 et 0,4 mm) est en effet nécessaire pour limiter les pertes par frottement et garantir la montabilité de l'ensemble.

Lorsque le baladeur 35, ou manchon, en liaison glissière avec le moyeu 37, est translaté vers le pignon fou 32 devant être synchronisé, il vient appliquer un effort axial sur l'anneau conique de plus grand diamètre 36₁, qui est transmis aux anneaux coniques inférieurs 36₂ et 36₃, et il s'ensuit qu'un couple de frottement est généré par le frottement des surfaces coniques en contact, une surface conique 36₄ solidaire du pignon 32 jouant le rôle d'anneau de plus petit diamètre. Ce couple de frottement est proportionnel à l'effort axial appliqué par le baladeur.

Lorsque le pignon 32 fou engrène avec un pignon récepteur situé sur l'arbre secondaire via une denture hélicoïdale, cela génère un effort de denture qui comporte une résultante axiale proportionnelle au couple transmis, et donc à l'effort appliqué par le manchon sur la dernière bague. Si l'angle d'hélice de la denture telle que la résultante axiale de l'effort d'engrènement (dans le cas couple positif venant du moteur vers les roues) est dirigé dans le sens opposé à l'effort appliqué sur le manchon, cela implique un phénomène parasite qui doit être pris en compte dans le pilotage de le dispositif de frottement.

En effet, alors que le manchon 35 exerce un effort axial donné, le couple généré par frottement des cônes est transmis à l'arbre secondaire via le rapport de démultiplication, ce qui créé un effort de denture résultant orienté en sens inverse de l'effort appliqué par le manchon 35, qui vient s'ajouter à l'effort initial de mise en contact initial. Cela créé donc un couple plus important que prévu.

Ce phénomène, dénommé auto-avalage, peut même provoquer une instabilité du dispositif de frottement. En effet, selon le rapport de démultiplication utilisé par le système de friction, pour un couple transmis donné, l'effort axial généré par la denture (résultante axiale de l'effort d'engrènement) est plus important que celui appliqué par le manchon (mais dans le sens opposé). Ainsi, si le pignon se situe avant sollicitation en contact avec le moyen d'arrêt le plus éloigné du manchon, dès que ce dernier entre en contact avec la bague extérieure pour appliquer un effort, l'effort de réaction étant plus important, le pignon est déplacé axialement pour traverser son jeu et génère donc une augmentation du couple transmis.

Si le jeu axial sous pignon et l'inertie des pièces déplacées sont trop importants, le pignon risque de venir s'écraser contre le système de friction et générer ainsi un pic de couple très important. En fonction de la raideur des différentes pièces considérées, le pignon est ensuite susceptible de rebondir puis revenir s'écraser, créant un second pic de couple. Le système risque donc d'être instable et de provoquer la rupture de la boîte de vitesses (si l'oscillation s'entretient ou même augmente en amplitude, le pic de couple risque de solidariser le système de friction).

L'objet de l'invention est de remédier aux inconvénients ci-dessus exposés, en proposant un dispositif de friction apte à transmettre un couple à des pignons à denture hélicoïdale sans générer d'effort parasite.

Un deuxième objet de l'invention est de fournir un tel dispositif qui soit utilisable dans le cadre de l'architecture d'une boîte de vitesses à dérivation de couple, et donc qui permette de transmettre la totalité du couple transmissible par glissement, qui soit compact, pilotable et facilement intégrable.

Ainsi l'invention concerne un dispositif de transmission de couple par friction comprenant :
- au moins une bague conique, ci-après dénommée rotor, liée en rotation à un moyeu,
- au moins une bague conique, ci-après dénommée stator, liée en rotation à un pignon, le pignon étant apte à être monté fou sur un arbre avec un jeu axial,
- chaque stator comprenant au moins un organe d'entraînement destiné à coopérer avec au moins une cavité pratiquée solidaire du pignon fou, de manière à réaliser une liaison glissière entre chaque stator et le pignon fou,
- les bagues coniques étant disposées concentriquement les unes à l'intérieur des autres, en respectant une alternance rotor/stator,
- le dispositif de friction comprenant en outre un manchon permettant d'exercer un effort axial sur la bague conique de plus grand diamètre, afin de générer un couple par friction entre l'ensemble des bagues coniques,
- l'ensemble des bagues coniques liées en rotation au pignon étant en liaison glissière avec celui-ci,
- ledit pignon (24) ne comportant pas de surface d'appui conique pour lesdites bagues,
- le jeu (J₁) entre le fond de ladite cavité (26₁) et l'extrémité dudit organe d'entraînement (440) correspondant, étant supérieur au jeu axial (J) du pignon sur son arbre,
   de sorte que, lorsque les bagues coniques sont mises en contact sous l'action de l'effort exercé par le manchon, le pignon soit apte à se déplacer le long de son jeu axial sans induire d'effort de serrage supplémentaire, le pignon fou étant tel qu'il peut couvrir l'intégralité de son jeu axial sans venir en appui sur l'une quelconque des bagues coniques et en particulier sans que le fond des cavités entre en contact avec l'extrémité libre des organes d'entraînement.

Dans une réalisation, les cavités sont portées par un flasque solidaire du pignon.

Dans une réalisation, chaque rotor comprend au moins un organe d'entraînement destiné à coopérer avec au moins une cavité pratiquée sur une face latérale du moyeu, de manière à réaliser une liaison glissière entre chaque rotor et le moyeu.

Dans une réalisation, l'angle de cône des surfaces de frottement portées par les bagues coniques est tel que le sommet de ce cône est dirigé vers le pignon.

Dans une réalisation, le moyeu comprend une surface d'appui conique destinée à entrer en contact avec le stator de plus petit diamètre.

Dans une réalisation, le manchon et la bague conique de plus grand diamètre forment une pièce unique.

L'invention concerne également une boîte de vitesses mécanique comportant un dispositif tel que défini ci-dessus.

Dans une réalisation, l'arbre de la boîte de vitesses portant le dispositif de friction comprend des moyens de lubrification de ce dispositif.

Dans une réalisation, le dispositif est associé au rapport le plus grand de la boîte de vitesses.

Dans une réalisation, le dispositif de frottement est associé à un ou plusieurs rapports intermédiaires de la boîte de vitesses.

Un exemple de réalisation de l'invention est décrit de manière non limitative en relation avec les figures parmi lesquelles :
- les figures 1a et 1b, déjà décrites, représentent un dispositif de synchronisation connu ;
- les figures 2a et 2b sont des schémas respectivement d'un premier et d'un deuxième mode de réalisation d'un dispositif selon l'invention ;
- les figures 3a, 3b et 3c montrent des vues en perspective du dispositif de la figure 2b en cours d'assemblage ;
- la figure 4 est un schéma d'une boîte de vitesses à dérivation de couple pourvu d'un dispositif selon l'invention,

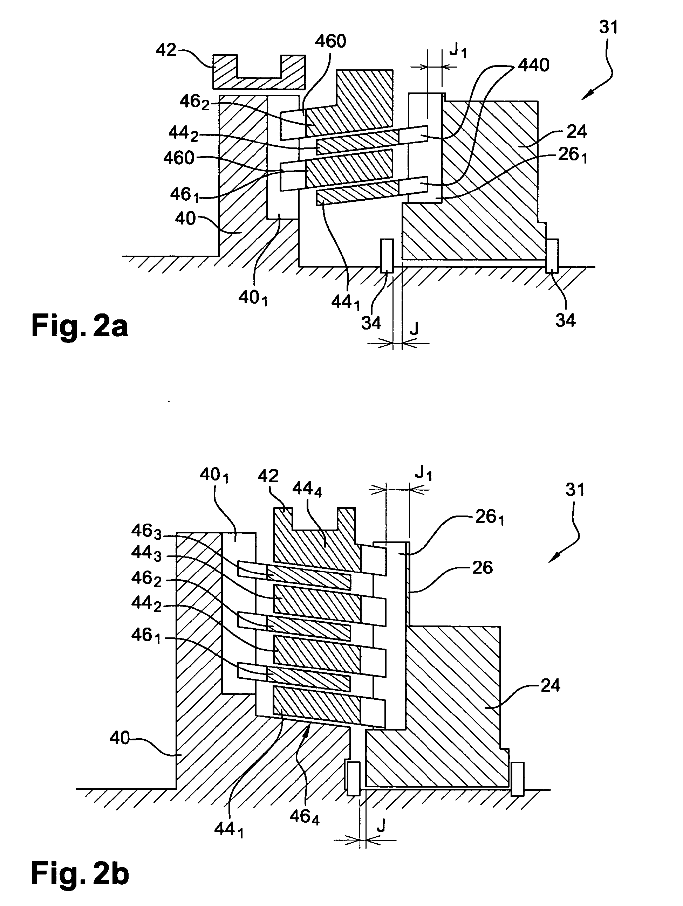

On décrit ci-après un premier mode de réalisation du dispositif selon l'invention, en relation avec la figure 2a. De manière connue, le dispositif 31 comprend un pignon fou 24 monté sur un arbre, avec des moyens d'arrêt en translation, dans l'exemple des circlips 34. De même que pour le dispositif de la figure 1 a, le pignon 24 est monté avec un jeu axial de fonctionnement J.

Le dispositif 31 comprend des bagues coniques 44₁, 44₂, 46₁, 46₂, de deux catégories : les rotors 46₁, 46₂, liés en rotation à un moyeu 40, lui-même lié en rotation à l'arbre sur lequel est disposé le pignon fou, et les stators 44₁, 44₂, liés en rotation au pignon 24. Afin de réaliser une liaison glissière entre le moyeu et l'ensemble des rotors 46₁, 46₂, le moyeu comprend plusieurs cavités de direction radiale, dans l'exemple trois rainures 40₁, qui sont destinés à coopérer avec des saillies de direction axiale, ou « tocs » 460, qui équipent chacun des rotors 46₁, 46₂. De même, le pignon fou 24 comporte un flasque 26 qui est pourvu de plusieurs cavités de direction radiale, dans l'exemple trois lumières 26₁, qui sont destinées à coopérer avec des saillies de direction axiale, ou « tocs » 440, qui équipent chacun des stators 44₁, 44₂. Ces tocs sont similaires à ceux qui équipent les rotors. De manière connue, un baladeur, ou manchon 42 permet de mettre en contact les bagues coniques lorsqu'on veut générer un couple par friction.

Selon l'invention, le dispositif 31 est tel que, lorsque les bagues coniques sont mises en contact sous l'action d'un effort exercé par le manchon 42, le pignon 24 est apte à se déplacer le long de son jeu axial J sans induire d'effort de serrage supplémentaire. On obtient cet effet grâce à l'absence de surface conique solidaire du pignon 24 (telle que la surface 36₄ du dispositif connu de la figure 1a), et en s'assurant que le pignon 24 puisse couvrir l'intégralité de son jeu axial le long de l'arbre sur lequel il est monté sans que le fond des cavités 26₁ ne viennent en contact avec l'extrémité des tocs 440 et, également, sans que le pignon 24 ne vienne en appui sur une ou plusieurs des bagues coniques, qu'elles soient liées en rotation au moyeu 40 (les rotors 46₁, 46₂) ou au pignon 24 lui-même (les stators 44₁, 44₂). Ainsi, on peut observer sur la figure 2a que, lorsque le pignon est en contact avec le circlip 34 le plus éloigné du moyeu 40, le jeu J₁ entre l'extrémité libre des tocs 440 et le fond des cavités 26₁ est supérieur au jeu axial du pignon 24 sur son arbre. On s'assure ainsi que, lorsqu'un effort dû à la denture hélicoïdale du pignon dirigé vers le moyeu 40 est généré, le pignon ne génère pas d'effort d'appui sur les stators 46₁ et 46₂, et donc pas d'effort de serrage supplémentaires des bagues coniques entre elles. Il est à noter toutefois qu'un moyen d'arrêt en translation de la bague conique inférieure 44₁ doit être prévu en remplacement de la surface 36₃ du dispositif connu de la figure 1 a.

En outre, comme on le décrit plus bas, il est possible d'améliorer le fonctionnement et la compacité du dispositif, notamment en réalisant le manchon et la bague conique de plus grand diamètre en une seule pièce, et en inversant l'angle des bagues coniques, comme montré sur la figure 2b qui représente une deuxième mode de réalisation.

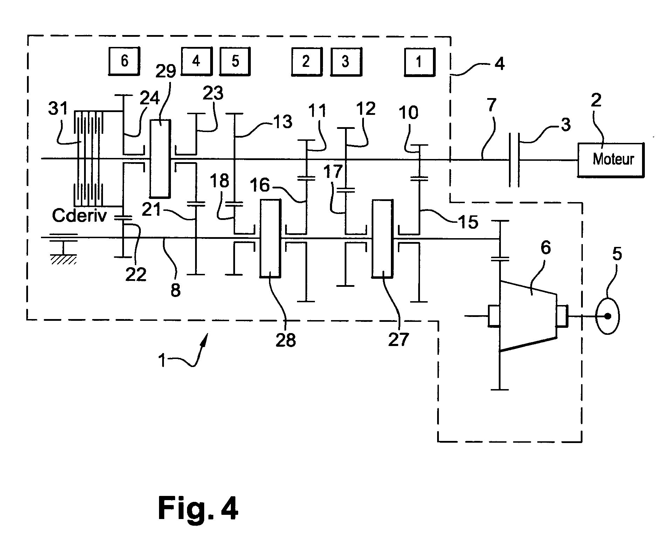

Comme annoncé dans le préambule, un deuxième objet de l'invention est de fournir un dispositif de synchronisation apte à transmettre un couple suffisant dans le cadre d'une boîte de vitesses à dérivation de couple. On décrit ci-après un exemple d'architecture d'une boîte de ce type en relation avec la figure 4.

La figure 4 montre une chaîne 1 de traction d'un véhicule automobile formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses. Un différentiel 6 assure la liaison entre l'arbre secondaire 8 et les roues 5 du véhicule.

En variante, la chaîne 1 de traction est complétée par une machine électrique (non représentée) positionnée sur l'arbre d'entrée de la boîte 4 de vitesse entre l'embrayage 3 et la boîte 4 de vitesses.

Plus précisément, la boîte 4 de vitesses comporte un arbre 7 primaire relié à l'embrayage 3 et un arbre 8 secondaire relié aux roues 5. L'arbre 7 primaire est un arbre simple et non un arbre concentrique comme dans la plupart des boîtes de vitesses à double embrayage.

Ces deux arbres 7 et 8 sont reliés entre eux par l'intermédiaire d'engrenages formant les rapports de vitesse 1 à 6 encadrés sur la figure. Les rapports de 1^{ère}, 2^{ème}, 3^{ème} et 5^{ème} sont formés chacun par une roue 10-13 entraînée par l'arbre 7 primaire et un pignon fou 15-18 relié à l'arbre 8 secondaire. Tandis que les rapports de 4^{ème} et 6^{ème} sont formés chacun par une roue 21-22 entraînée par l'arbre 8 secondaire et un pignon fou 23-24 relié à l'arbre 7 primaire.

Les rapports de vitesses sont rassemblés par paire avec un seul manchon de crabotage 27-29 qui engage l'un des deux pignons fous des engrenages par déplacement axial dans une direction et l'autre pignon par déplacement dans la direction opposée.

Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5), comme représenté.

Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}.

De préférence, une combinaison de rapports de type (1-4 ; 2-5 ; 3-6) est telle qu'elle permet d'avoir un mouvement des actionneurs pilotant les crabots dans un même sens pour un passage successif : le sens de dégagement du rapport de 1^{ère} est le même que le sens d'engagement du rapport suivant la 2^{ème} et ainsi de suite.

En outre, un dispositif 31 de couplage par friction est disposé sur le rapport le plus élevé, dans l'exemple le rapport de 6^{ème}. Cet dispositif 31 conforme à l'invention a pour rôle d'égaliser les vitesses lors des changements de rapports montants (autrement dit d'amener le manchon de crabotage et le pignon à engrener à des vitesses de rotation identiques avant de réaliser le crabotage) tout en permettant la transmission de couple lors de ces changements de rapport.

En variante, la boîte de vitesses comporte six rapports et le dispositif 31 est associé au rapport de 3^{ème}, 4^{ème} ou de 5^{ème}.

En variante, la boîte 4 de vitesses comporte un deuxième arbre secondaire (non représenté), les paires de pignons fous étant alors réparties entre ces trois arbres.

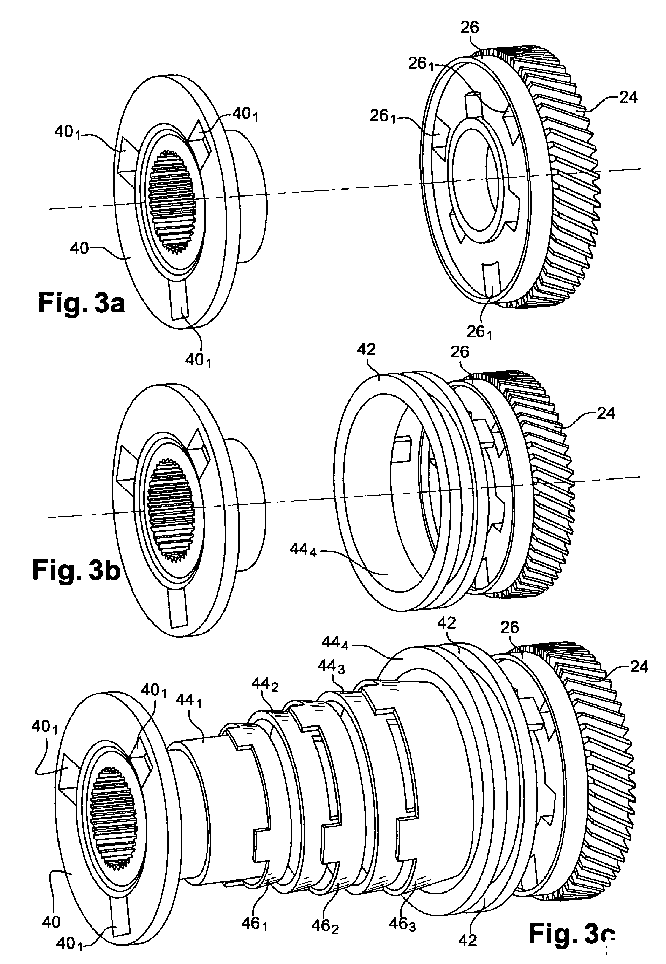

Le dispositif de friction 31, dans son deuxième mode de réalisation, va maintenant être décrit en relation avec les figures 2b, 3a, 3b et 3c. Afin d'augmenter la capacité en couple transmissible et en énergie transmissible, le dispositif comprend ici un nombre plus important de bagues coniques, dans l'exemple trois rotors 46₁, 46₂, 46₃, et quatre stators 44₁, 44₂, 44₃, 44₄.

De même que dans le précédent mode de réalisation, les rotors 46₁, 46₂, 46₃ sont liés en rotation à un moyeu 40, lui-même lié en rotation à l'arbre sur lequel est disposé le pignon fou du rapport auquel est associé le dispositif de friction 31. Dans l'exemple, le dispositif de friction 31 est associé au pignon fou 24 du rapport de démultiplication final, soit celui du 6^{ème} rapport. Le dispositif de friction est donc ici disposé sur l'arbre primaire 7. Le moyeu 40 comprend également plusieurs cavités de direction radiale, dans l'exemple trois rainures 40₁, afin de recevoir les « tocs » 460 des rotors 46₁, 46₂, 46₃.

Les stators 44₁, 44₂, 44₃, 44₄ sont liés en rotation au pignon fou du rapport auquel est associé le dispositif de friction 31, ici le pignon fou 24. Pour réaliser la liaison glissière entre les stators 44₁, 44₂, 44₃, 44₄ et le pignon fou 24, ce dernier est solidaire d'un flasque 26 (le pignon et son flasque pourraient toutefois constituer une pièce unique). De même que le moyeu 40, le flasque est pourvu de plusieurs cavités de direction radiale, dans l'exemple quatre lumières 26₁, qui sont destinées à coopérer avec des saillies de direction axiale, ou « tocs » 440, qui équipent chacun des stators 44₁, 44₂, 44₃, 44₄. Ces tocs sont similaires à ceux qui équipent les rotors.

Comme on peut le voir sur la figure 3c, qui représente une vue éclatée du dispositif de friction 31, les stators et les rotors sont disposés de manière concentrique, en respectant une alternance stator/rotor, et sont de diamètres décroissants afin d'être imbriqués les uns à l'intérieur des autres. Ceux-ci présentent une première différence fondamentale d'avec le premier mode de réalisation de l'invention : l'angle des bagues coniques est ici inversé, comme le montre la comparaison des figures 2a et 2b.

Cette caractéristique est, dans le cadre de la présente invention, très avantageuse. En effet, cela permet d'inverser le sens de déplacement du manchon lorsque l'on souhaite mettre en contact les bagues coniques, ce qui participe à la suppression du problème d'effort parasite connu dans l'état de la technique, étant donné que l'effort appliqué par le manchon et l'effort de denture (et donc les déplacements associés) sont dirigés dans le même sens.

Cette inversion d'angle a également pour effet que le diamètre des bagues coniques est décroissant du pignon fou 24 vers le moyeu, à la différence de l'art antérieur ou même du mode de réalisation de la figure 1 a. Cela permet d'équiper le moyeu 40 d'une surface conique 46₄ solidaire du moyeu en rotation et en translation, qui joue le rôle de surface conique de plus petit diamètre. Ainsi, le problème d'arrêt en translation de la bague conique de plus petit diamètre du premier mode de réalisation est ici résolu simplement, sans pièce nécessitant un assemblage supplémentaire.

En outre, une caractéristique supplémentaire permet de gagner encore en efficacité et en compacité : le manchon 42 et la bague conique de plus grand diamètre 44₄ sont réalisés en une pièce unique, comme visible en particulier sur la figure 2b.

De manière classique, chaque bague conique comprend deux surfaces de frottement, une surface externe et une surface interne, à l'exception du stator de plus grand diamètre 44₄, qui ne dispose pas de surface de frottement externe et qui porte le manchon 42. Pour chaque bague conique intermédiaire, la surface de frottement externe est destinée à coopérer avec la surface de frottement interne de la bague conique supérieure, tandis que la surface de frottement interne est destinée à coopérer avec la surface de frottement externe de la bague inférieure.

Le principe de fonctionnement du dispositif de friction est le suivant : en position de repos, lorsque le dispositif 31 n'est pas sollicité pour transmettre du couple, l'ensemble des surfaces de frottement des bagues coniques ne sont pas en contact, tout en étant très proches les unes des autres. On s'assure ainsi que lorsque le dispositif 31 est en position de repos, ou débrayée, il n'y a pas ou peu de couple résiduel de friction.

Lorsque l'on veut solliciter le dispositif 31 afin qu'il génère un couple de friction, il faut exercer un effort axial qui va permettre la mise en contact de l'ensemble des surfaces de frottement, générant ainsi un couple de friction transmis du moyeu 40 vers le pignon fou 24. Afin de générer l'effort axial nécessaire, le manchon 42 est commandé de manière connue par un mécanisme d'entraînement de type fourchette et d'un actionneur, par exemple hydraulique ou électrique. Comme le manchon est porté par le stator de plus grand diamètre, il est en liaison glissière avec le pignon 24.

Le dispositif de friction 31 permet donc la synchronisation nécessaire au passage d'un rapport de vitesse, tout en transmettant un couple au pignon fou pendant ce passage. Le pignon fou 24 étant lié en rotation, par l'intermédiaire de la roue dentée 22, aux roues 5 du véhicule, et, le moyeu 40 étant lié au moteur 2, le couple de friction généré sera donc transmis aux roues, permettant ainsi d'éviter toute rupture de couple durant les passages de vitesse. Le couple transmissible est fonction de l'effort axial appliqué, du nombre et des dimensions des surfaces de frottement des bagues coniques, ainsi que de l'angle de cône de ces surfaces. Une fois les paramètres fixes déterminés, le couple transmis sera donc en pratique proportionnel à l'effort axial appliqué ainsi qu'à l'évolution du couple de frottement. La multiplication du nombre de surface de frottement permet d'augmenter de manière importante la surface totale de frottement, et donc le couple transmissible et l'énergie admissible, tout en conservant un encombrement axial et radial minimal facilitant l'intégration du dispositif 31 dans la boîte de vitesses.

Une augmentation supplémentaire de la surface totale de frottement peut également être obtenue en augmentant le diamètre des bagues coniques. En pratique, l'encombrement axial et radial que doit respecter le dispositif de friction 31 déterminera de quelle manière on peut jouer sur le nombre et le diamètre des bagues coniques pour obtenir la valeur de couple transmissible souhaitée.

Le dispositif de friction selon l'invention présente donc l'avantage de nécessiter un effort axial limité pour un même couple de friction transmissible par rapport aux dispositifs connus, ainsi qu'une haute capacité énergétique, c'est-à-dire une capacité à dissiper de grandes valeurs d'énergie, tout en supprimant les inconvénients de l'art antérieur, en particulier tout effort parasite généré par une denture hélicoïdale.

## Revendications

1. Dispositif (31) de transmission de couple par friction, comprenant :
- au moins une bague conique, ci-après dénommée rotor (46₁, 46₂, 46₃), liée en rotation à un moyeu (40),
- au moins une bague conique, ci-après dénommée stator (44₁, 44₂, 44₃, 44₄), liée en rotation à un pignon (24), le pignon étant apte à être monté fou sur un arbre avec un jeu axial (J),
- les bagues coniques étant disposées concentriquement les unes à l'intérieur des autres, en respectant une alternance rotor/stator,
- le dispositif de friction (31) comprenant en outre un manchon (42) permettant d'exercer un effort axial sur la bague conique de plus grand diamètre, afin de générer un couple par friction entre l'ensemble des bagues coniques,
- l'ensemble des bagues coniques (44₁, 44₂, 44₃, 44₄) liées en rotation au pignon (24) étant en liaison glissière avec celui-ci, **caractérisé en ce que**,
- chaque stator (44₁, 44₂, 44₃, 44₄) comprenant au moins un organe d'entraînement de direction axiale (440) destiné à coopérer avec au moins une cavité de direction radiale (26₁) pratiquée solidaire du pignon fou (24), de manière à réaliser une liaison glissière entre chaque stator et le pignon fou (24),
- ledit pignon (24) ne comportant pas de surface d'appui conique pour lesdites bagues.
- le jeu (J₁) entre le fond de ladite cavité (26₁) et l'extrémité dudit organe d'entraînement (440) correspondant, étant supérieur au jeu axial (J) du pignon sur son arbre.
- de sorte que, lorsque les bagues coniques sont mises en contact sous l'action de l'effort exercé par le manchon, le pignon (24) soit apte à se déplacer le long de son jeu axial sans induire d'effort de serrage supplémentaire car sans venir en appui sur l'une quelconque des bagues coniques et en particulier sans que le fond des cavités (26₁) entre en contact avec l'extrémité libre des organes d'entraînement (440).

2. Dispositif (31) selon la revendication 1, dans lequel les cavités (26₁) sont portées par un flasque (26) solidaire du pignon (24).

3. Dispositif (31) selon l'une des revendications 1 à 2, dans laquelle chaque rotor (46₁, 46₂, 46₃) comprend au moins un organe d'entraînement (460) destiné à coopérer avec au moins une cavité (40₁) pratiquée sur une face latérale du moyeu (40), de manière à réaliser une liaison glissière entre chaque rotor et le moyeu (40).

4. Dispositif (31) selon l'une des revendications 1 à 3, dans lequel l'angle de cône des surfaces de frottement portées par les bagues coniques est tel que le sommet de ce cône est dirigé vers le pignon (24).

5. Dispositif (31) selon la revendication 4, dans lequel le moyeu (40) comprend une surface d'appui conique 46₄, destinée à entrer en contact avec le stator (44₁) de plus petit diamètre.

6. Dispositif (31) selon l'une des revendications 1 à 5, dans lequel le manchon (42) et la bague conique de plus grand diamètre (44₄) forment une pièce unique.

7. Boîte de vitesses mécanique comportant un dispositif selon l'une des revendications précédentes.

8. Boîte de vitesses selon la revendication 7, dans laquelle l'arbre (7) portant le dispositif de friction (31) comprend des moyens de lubrification de ce dispositif.

9. Boîte de vitesses selon l'une des revendications 7 et 8, **caractérisée en ce que** le dispositif (31) est associé au rapport le plus grand de la boîte de vitesses.

10. Boîte de vitesses selon l'une des revendications 7 à 9, **caractérisée en ce que** le dispositif (31) de frottement est associé à un ou plusieurs rapports intermédiaires de la boîte de vitesses.

## Claims

1. A device (31) for transmission of torque by friction, comprising:
- at least one conical ring, hereinafter designated rotor (46₁, 46₂, 46₃), connected in rotation to a hub (40),
- at least one conical ring, hereinafter designated stator (44₁, 44₂, 44₃, 44₄), connected in rotation to a pinion (24), the pinion being suited to be mounted loosely on a shaft with an axial play (J),
- the conical rings being disposed concentrically one inside the others, observing a rotor/stator alternation,
- the friction device (31) further comprising a sleeve (42) permitting an axial force to be exerted on the conical ring of greatest diameter, so as to generate a torque by friction between the set of conical rings,
- the set of conical rings (44₁, 44₂, 44₃, 44₄) connected in rotation to the pinion (24) being in sliding connection therewith,
**characterized in that**
- each stator (44₁, 44₂, 44₃, 44₄) comprising at least one entrainment member of axial direction (440) intended to cooperate with at least one cavity of radial direction (26₁), formed integrally with the loose pinion (24), so as to realize a sliding connection between each stator and the loose pinion (24),
- the said pinion (24) not comprising a conical support surface for the said rings,
- the play (J₁) between the bottom of the said cavity (26₁) and the end of the said corresponding entrainment member (440) being greater than the axial play (J) of the pinion on its shaft,
- such that when the conical rings are placed in contact under the action of the force exerted by the sleeve, the pinion (24) is suited to move along its axial play without inducing additional tightening force, since without coming to rest on any one of the conical rings and in particular without the bottom of the cavities (26₁) coming in contact with the free end of the entrainment members (440).

2. The device (31) according to Claim 1, in which the cavities (26₁) are carried by a flange (26) integral with the pinion (24).

3. The device (31) according to one of Claims 1 to 2, in which each rotor (46₁, 46₂, 46₃) comprises at least one entrainment member (460) intended to cooperate with at least one cavity (40₁) formed on a lateral face of the hub (40), so as to realize a sliding connection between each rotor and the hub (40).

4. The device (31) according to one of Claims 1 to 3, in which the cone angle of the friction surfaces carried by the conical rings is such that the apex of this cone is directed towards the pinion (24).

5. The device (31) according to Claim 4, in which the hub (40) comprises a conical support surface 46₄, intended to come into contact with the stator (44₁) of smallest diameter.

6. The device (31) according to one of Claims 1 to 5, in which the sleeve (42) and the conical ring of greatest diameter (44₄) form a single piece.

7. A mechanical gear box comprising a device according to one of the preceding claims.

8. The gear box according to Claim 7, in which the shaft (7) carrying the friction device (31) comprises means for lubrication of this device.

9. The gear box according to one of Claims 7 and 8, **characterized in that** the device (31) is associated with the greatest ratio of the gear box.

10. The gear box according to one of Claims 7 to 9, **characterized in that** the friction device (31) is associated with one or more intermediate ratios of the gear box.

## Patentansprüche

1. Vorrichtung (31) zum Übertragen von Moment durch Reibung, Folgendes aufweisend:
- mindestens einen Keilring, unten Rotor (46₁, 46₂, 46₃) genannt, der mit einer Nabe (40) in Drehung verbunden ist,
- mindestens einen Keilring, unten Stator (44₁, 44₂, 44₃, 44₄) genannt, der mit einem Ritzel (24) in Drehung verbunden ist, wobei das Ritzel auf einer Welle mit einem axialen Spiel (J) frei laufend montiert werden kann,
- wobei die Keilringe konzentrisch ineinander unter Einhaltung eines Wechsels Rotor/Stator angeordnet sind,
- wobei die Reibungsvorrichtung (31) ferner eine Hülse (42) aufweist, die es erlaubt, eine axiale Kraft auf den Kegelring mit größtem Durchmesser auszuwirken, um ein Reibungsmoment zwischen allen Kegelringen zu erzeugen,
- wobei die Einheit der Kegelringe (44₁, 44₂, 44₃, 44₄), die in Drehung mit dem Ritzel (24) verbunden sind, mit diesem in Gleitführungsverbindung sind, **dadurch gekennzeichnet, dass**
- jeder Stator (44₁, 44₂, 44₃, 44₄) mindestens ein Antriebsorgan mit axialer Richtung (440) aufweist, das dazu bestimmt ist, mit mindestens einem Hohlraum mit radialer Richtung (26₁) zusammenzuwirken, der fest verbunden mit dem freien Ritzel (24) ausgebildet ist, so dass eine Gleitführungsverbindung zwischen jedem Stator und dem freien Ritzel (24) hergestellt wird,
- das Ritzel (24) keine kegelige Auflagefläche für die Ringe aufweist,
- das Spiel (J₁) zwischen dem Grund des Hohlraums (26₁) und dem Ende des entsprechenden Antriebsorgans (440) größer ist als das axiale Spiel (J) des Ritzels auf seiner Welle,
- so dass, wenn die Kegelringe unter der Einwirkung der von der Hülse ausgeübten Kraft in Berührung kommen, das Ritzel (24) sich entlang seines axialen Spiels bewegen kann, ohne eine zusätzliche Spannkraft einzuführen, weil es nicht auf einen der Kegelringe zum Aufliegen kommt und insbesondere weil der Grund der Hohlräume (26₁) mit dem freien Ende der Antriebsorgane (440) nicht in Berührung kommt.

2. Vorrichtung (31) nach Anspruch 1, bei der die Hohlräume (26₁) von einem Flansch (26), der fest mit dem Ritzel (24) verbunden ist, getragen werden.

3. Vorrichtung (31) nach einem der Ansprüche 1 bis 2, bei dem jeder Rotor (46₁, 46₂, 46₃) mindestens ein Antriebsorgan (460) aufweist, das dazu bestimmt ist, mit mindestens einem Hohlraum (40₁), der auf einer seitlichen Seite der Nabe (40) eingerichtet ist, zusammenzuwirken, so dass eine Gleitführungsverbindung zwischen jedem Rotor und der Nabe (40) hergestellt wird.

4. Vorrichtung (31) nach einem der Ansprüche 1 bis 3, bei der der Kegelwinkel der Reibungsflächen, die von den Kegelringen getragen werden, derart ist, dass der Scheitel dieses Kegels zu dem Ritzel (24) gerichtet ist.

5. Vorrichtung (31) nach Anspruch 4, bei der die Nabe (40) eine Kegelauflagefläche (46₄) aufweist, die dazu bestimmt ist, mit dem Stator (44₁) mit kleinstem Durchmesser in Berührung zu kommen.

6. Vorrichtung (31) nach einem der Ansprüche 1 bis 5, bei der die Hülse (42) und der Kegelring mit größtem Durchmesser (44₄) einen einzigen Teil bilden.

7. Mechanisches Schaltgetriebe, das eine Vorrichtung nach einem der vorhergehenden Ansprüche aufweist.

8. Schaltgetriebe nach Anspruch 7, bei dem die Welle (7), die die Reibungsvorrichtung (31) trägt, Schmiermittel dieser Vorrichtung aufweist.

9. Schaltgetriebe nach einem der Ansprüche 7 und 8, **dadurch gekennzeichnet, dass** die Vorrichtung (31) mit dem höchsten Gang des Schaltgetriebes verbunden ist.

10. Schaltgetriebe nach einem der Ansprüche 7 bis 9, **dadurch gekennzeichnet, dass** die Reibungsvorrichtung (31) mit einem oder mehreren Zwischengängen des Schaltgetriebes verbunden ist.
